# EUROPÄISCHE PATENTANMELDUNG

(11) **EP 2 924 846 A1**
(43) Veröffentlichungstag der Anmeldung: **30.09.2015**
(21) Anmeldenummer: 15305401.0
(22) Anmeldetag: 19.03.2015
(51) Int. Cl.: H02J 7/00

(54) **Halteeinrichtung für mobile elektrische/elektronische Geräte**

(30) Priorität: 25.03.2014 DE 102014104075
(71) Anmelder: Berker GmbH & Co. KG, 58579 Schalksmühle (DE)
(72) Erfinder: Ceuca, Robert, 58579 SCHALKSMÜHLE (DE); Wenzel, Daniel, 58566 KIERSPE (DE)
(74) Vertreter: Nuss, Laurent

(57) **Zusammenfassung**

Es wird eine Halteeinrichtung für mobile elektrische/elektronische Geräte mit einem, rückseitig über Befestigungselemente an einer Wand eines Gebäudes festlegbaren, Sockelteil vorgeschlagen, welches frontseitig zumindest ein Halteelement aufweist.

Zu dem Zweck, eine Halteeinrichtung zu schaffen, welche, ohne bauliche Änderungen vornehmen zu müssen, in der Lage ist, mobile elektrische/elektronische Geräte (mobile Kleingeräte) mit beliebigen Bauformen haltend aufzunehmen, ist zumindest ein Halteelement als ein eine vakuumeffektartige Haltewirkung für das zugeordnete mobile elektrische/elektronische Gerät entwickelndes Haftpad mit Nanostruktur ausgeführt.

## Beschreibung

Die vorliegende Erfindung geht von einer gemäß Oberbegriff des Hauptanspruches konzipierten Halteeinrichtung für mobile elektrische/elektronische Geräte aus.

Solche Halteeinrichtungen sind in der Regel dafür vorgesehen, mobile elektrische/elektronische Geräte haltend aufzunehmen. Üblicherweise handelt es sich bei den mobilen elektrischen/elektronischen Geräten um mobile Kleingeräte, wie zum Beispiel Mobiltelefone, MP3-Player, mobile Spielkonsolen, elektrische Zahnbürsten, Fernbedienungen und so weiter. Oftmals will der Benutzer eine Möglichkeit schaffen, um solche mobilen Kleingeräte an einem geeigneten, schnell auffindbaren Ort zur Verfügung zu haben. Bei der Vielzahl von solchen mobilen Kleingeräten, die heutzutage in Gebrauch sind, ergibt sich dann, dass auch eine entsprechende Anzahl von unterschiedlichen Halteeinrichtungen vorgesehen werden müssen, um eine geordnete Aufbewahrung solcher mobilen Kleingeräte vornehmen zu können. Für jedes mobile Kleingerät wird somit je eine baulich speziell darauf abgestimmte Halteeinrichtung benötigt, was für den Benutzer umständlich und aufwendig ist.

Eine dem Oberbegriff des Hauptanspruches entsprechende Halteeinrichtung ist durch die DE 20 2012 100 715 U1 bekannt geworden. Diese Halteeinrichtung ist gleichzeitig als Ladeeinrichtung ausgeführt und an ein Wechselspannungsnetz eines Gebäudes angeschlossen. Eine solche Halteeinrichtung weist einen Adapter zur Halterung von mobilen Kleingeräten auf, der speziell auf die Bauform des mobilen Kleingerätes abgestimmt ist. Ändert sich die Bauform des aufzunehmenden mobilen Kleingerätes, muss deshalb der Adapter ausgetauscht oder eine zusätzliche Halteeinrichtung installiert werden, was umständlich ist und entsprechende Kosten verursacht.

Aus der Druckschrift US 2013/ 0 341 412 A1 ist eine Befestigungsvorrichtung zum Befestigen eines mobilen elektronischen Gerätes an einer glatten Oberfläche mittels zweiseitiger Saugnäpfe bekannt. Aus der Druckschrift DE 10 2011 101 412 A1 ist ein elektrisches Installationsgerät mit Ladegerät und Ablagemöglichkeit für ein mobiles Audio- und Kommunikationsgerät bekannt. Eine mit einem Gerätesockel verbindbare Zentralscheibe ist mit einer Frontblende vorgesehen, an welche ein schwenkbares Ablagebord über ein Scharniergelenk befestigt ist. Das Ablagebord weist eine Ablagefläche für das mobile Audio- und Kommunikationsgerät sowie an seiner anderen Hauptfläche eine in hochgeklappter Position vertikal gerichtete Ablagebord-Rückseite auf.

Der vorliegenden Erfindung liegt deshalb die Aufgabe zugrunde, eine Halteeinrichtung für mobile elektrische/elektronische Geräte zu schaffen, welche ohne bauliche Änderungen vornehmen zu müssen, in der Lage ist, mobile Kleingeräte mit beliebigen Bauformen haltend aufzunehmen. Diese Aufgabe wird durch die im kennzeichnenden Teil des Hauptanspruches angegebenen Merkmale gelöst.

Bei einer solchermaßen ausgebildeten Halteeinrichtung ist besonders vorteilhaft, dass diese sich besonders einfach in bestehende Designlinien, auch von, bereits im Markt befindlichen elektrischen/elektronischen Installationsgeräten integrieren lässt. Vorteilhafterweise weist eine derartig ausgeführte Halteeinrichtung keine, zur haltenden Aufnahme von mobilen Kleingeräten notwendigen Haltemittel auf, welche um einen wesentlichen Teil über die frontseitige Oberfläche hinausstehen. Auch ist es möglich, mehrere mobile Kleingeräte durch eine einzige Halteeinrichtung, oder bedarfsgerecht mal das eine oder mal das andere mobile Kleingerät haltend aufzunehmen.

Das im Hauptanspruch erwähnte Haftpad mit Nanostruktur kann auch als Haftmatte mit Nanostruktur oder als Nanogrip-Pad bezeichnet werden.

Vorzugsweise weist das Haftpad mit Nanostruktur einen scheibenförmigen ersten Haltebereich und einen den ersten Haltebereich ringförmig umgebenden zweiten Haltebereich auf.

Vorzugsweise weist das mobile elektrische/elektronische Gerät einen im Wesentlichen ebenen Außenflächenabschnitt auf. Vorzugsweise ist der Außenflächenabschnitt zur Befestigung des elektrischen/elektronischen Gerätes an dem Halteelement an das Halteelement anlegbar.

Vorzugsweise weist das Halteelement und/oder das Haftpad mit Nanostruktur und/oder der erste Haltebereich und/oder der zweite Haltebereich wenigstens eine Haltefläche zum Halten des mobilen elektrischen/elektronischen Gerätes auf. Vorzugsweise ist das elektrische/elektronische Gerät durch Anlegen, weiterhin vorzugsweise durch Andrücken, des elektrischen/elektronischen Gerätes und/oder des Außenflächenabschnitts an die Haltefläche an dem Halteelement befestigbar.

Vorzugsweise ist die wenigsten eine Haltefläche mit der Nanostruktur versehen. Vorzugsweise ist die Nanostruktur durch eine Vielzahl an nebeinanderliegenden Ausbildungen gebildet, die die vakuumeffektartige Haltewirkung erzeugen. Vorzugsweise weisen die Ausbildungen eine Größe, die zwischen 1 Nanometer und 1 Mikrometer, weiterhin vorzugsweise zwischen 10 Nanometer und 100 Nanometer, liegt, auf. Vorzugsweise sind die Ausbildungen als Fasern und/oder als Haare und/oder als Härchen und/oder als Schäufelchen und/oder als Krater und/oder als Nanokrater ausgebildet. Vorzugsweise können die Schäufelchen als Spatulae bezeichnet werden. Vorzugsweise können die Härchen als Setae bezeichnet werden.

Vorzugsweise besteht das Halteelement und/oder das Haftpad mit Nanostruktur und/oder der erste Haltebereich und/oder der zweite Haltebereich und/oder die Haltefläche aus einem Polyurethan.

Vorzugsweise weist das Haftpad mit Nanostruktur und/oder der erste Haltebereich und/oder der zweite Haltebereich und/oder die Haltefläche eine kraterartige, insbesondere eine mit einer Vielzahl an nebeneinanderliegenden Nanokratern versehene, Oberfläche auf.

Vorzugsweise dient die Haltefläche und/oder die kraterartige Oberfläche und/oder die Fasern und/oder die Haare und/oder die Härchen und/oder die Schäufelchen und/oder die Krater und/oder die Nanokrater zur Erzeugung einer Haltewirkung mittels Vakuumeffekt. Alternativ oder zusätzlich dient die Haltefläche und/oder die kraterartige Oberfläche und/oder die Fasern und/oder die Haare und/oder die Härchen und/oder die Schäufelchen und/oder die Krater und/oder die Nanokrater zur Erzeugung einer Haltewirkung mittels Van-der-Waals-Kräften.

Weitere vorteilhafte Ausgestaltungen des erfindungsgemäßen Gegenstandes sind in den Unteransprüchen angegeben und werden anhand eines in den Zeichnungen dargestellten Ausführungsbeispiels näher erläutert. Dabei zeigen:
Fig. 1: prinziphaft eine Explosionsdarstellung einer solchen Halteeinrichtung, räumlich in Vorderansicht;
Fig. 2: prinziphaft eine Explosionsdarstellung einer solchen Halteeinrichtung, räumlich in Rückansicht;
Fig. 3: prinziphaft eine gemäß Figur 1 ausgeführte Halteeinrichtung, in Zuordnung eines ersten mobilen Kleingerätes;
Fig. 4: prinziphaft eine gemäß Figur 1 ausgeführte Halteeinrichtung, in Zuordnung eines zweiten mobilen Kleingerätes.

Wie aus den Figuren hervorgeht, besteht eine solche Halteeinrichtung im Wesentlichen aus einem Sockelteil 1, welches rückseitig mehrere als Schrauben ausgebildete Befestigungselemente 2 an der Wand eines Gebäudes festgelegt wird.

Frontseitig sind am Sockelteil 1 zwei Halteelemente 3 festgelegt, die jeweils als eine vakuumartige Haftwirkung für das zugeordnete mobile elektrische/elektronische Gerät G (mobile Kleingeräte) entwickelndes Haftpad mit Nanostruktur ausgeführt sind. Die Haftpads mit Nanostruktur können auch als Haftmatte mit Nanostruktur oder als Nanogrip-Pad bezeichnet werden. Das Sockelteil 1 ist somit frontseitig mit zwei Halteelementen 3 ausgerüstet, die geeignet sind, beliebig gestaltete mobile Kleingeräte G aufzunehmen. Frontseitig sind die beiden Halteelemente 3 von einer formschönen Designabdeckung 4 umgeben, welche ihrerseits frontseitig den formschönen Abschluss der Halteeinrichtung darstellt. Wie bereits erwähnt, sind die beiden Halteelemente 3 jeweils als Haftpads mit Nanostruktur ausgeführt, die eine vakuumeffektartige Haltewirkung für das zugeordnete mobile Kleingerät G entwickeln. Das bedeutet, ohne weitere mechanische Haltemaßnahmen bzw. Haltemittel können, beliebige Bauformen aufweisende, von verschiedenen Herstellern angebotene, mobile Kleingeräte G durch einfaches Aufsetzen auf die Haftpads mit Nanostruktur (Halteelemente 3) haltend an der Halteeinrichtung festgelegt bzw. mit dieser gekoppelt werden. Um besonders gute Halte- bzw. Koppeleigenschaften zu gewährleisten und sich optisch von einer Schaltwippe eines elektrischen Schaltgerätes deutlich zu unterscheiden, besteht jedes der beiden Halteelemente 3 aus einem scheibenförmigen ersten Haltebereich 3a und einem, den ersten Haltebereich 3a ringförmig umgebenden zweiten Haltebereich 3b. Damit eine solche Halteeinrichtung auf bekannte Art und Weise an einer Installationsdose 5 befestigt werden kann, sind am Sockelteil 1 entsprechend ausgeführte Befestigungsmöglichkeiten in Form von Löchern und/oder Langlöchern vorgesehen, die eine derartige Befestigung auf einfache Art und Weise ermöglichen.

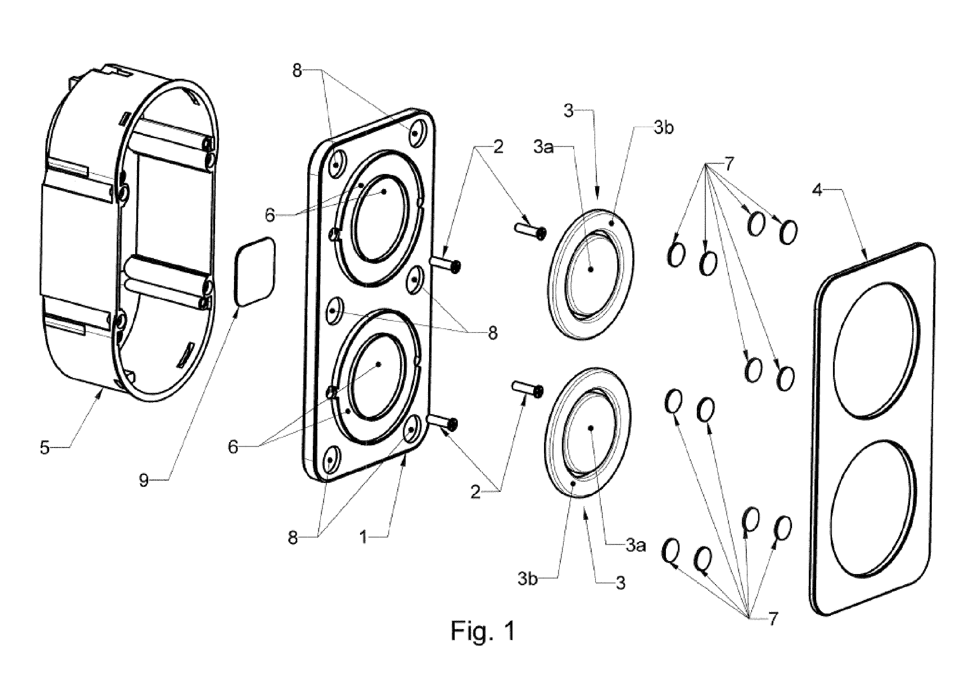

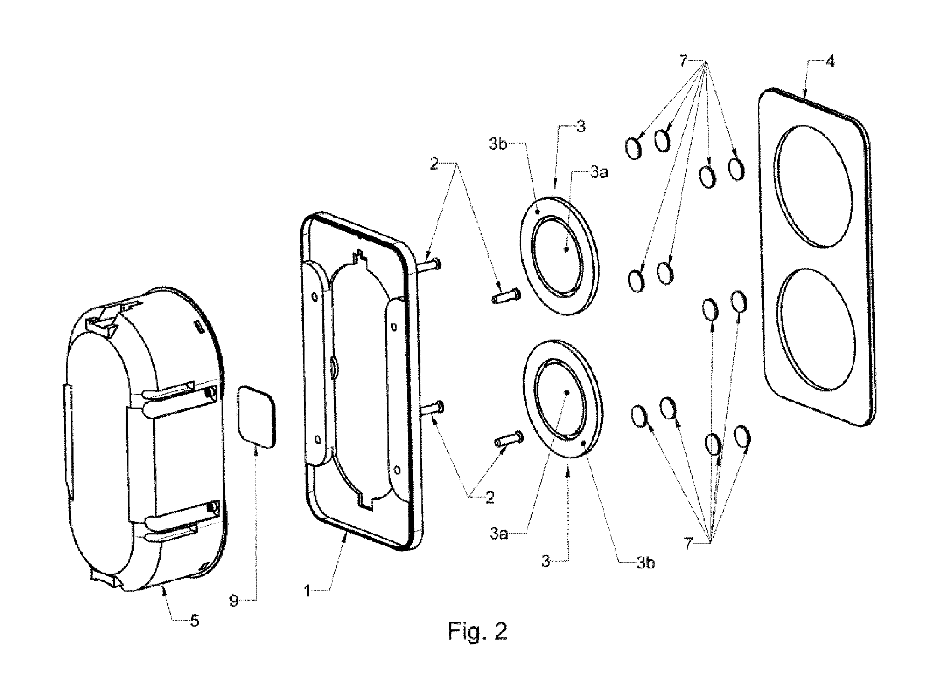

Wie des Weiteren insbesondere aus Figur 1 und Figur 2 hervorgeht, wird das Sockelteil 1 über vier Schrauben 2 an einer handelsüblichen Installationsdose 5 festgelegt, welche üblicherweise als Unterputzinstallation in eine Wand eines Gebäudes eingebaut ist. Wie bereits beschrieben, sind die Haftpads mit Nanostruktur (Halteelemente 3 beziehungsweise erste Haltebereiche 3a und zweite Haltebereiche 3b) über eine Klebeverbindung frontseitig am Sockelteil 1 festgelegt. Um eine genaue Positionierung der beiden ersten Haltebereiche 3a und der beiden zweiten Haltebereiche 3b vornehmen zu können, ist die Frontseite des Sockelteils 1 mit entsprechend ausgeformten Positionierungsbereichen 6 versehen. Um die Designabdeckung 4 wiederlösbar mit dem Sockelteil 1 haltend zu verbinden, sind sechs Klettverbindungen (zum Beispiel Dual Lock Pads) vorgesehen, welche jeweils aus zwei Klettelementen 7 bestehen. Mit ihrer Rückseite werden sechs der zwölf Klettelemente 7 mit der Frontseite des Sockelteils 1 und sechs der zwölf Klettelemente 7 mit der Rückseite der Designabdeckung 4 verklebt. Um eine genaue Positionierung der zwölf Klettelemente 7 vornehmen zu können, sind in das Sockelteil 1 sechs Positionierhilfen 8, jeweils ausgeführt als Vertiefung, eingeformt. Um gegebenenfalls die beiden Halteelemente 3 auf einfache Art und Weise austauschen zu können, können diese auch auf ein Trennelement aufgeklebt sein, welches seinerseits wiederlösbar mit dem Sockelteil 1 verrastet und/oder verschraubt ist. Aus Gründen der Einfachheit ist eine solche Ausführung in den Figuren nicht dargestellt.

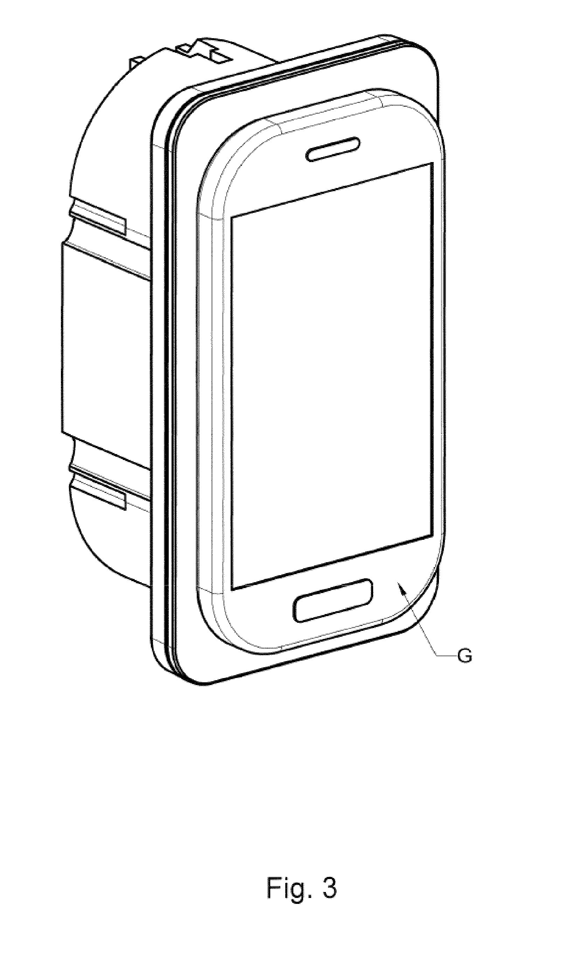

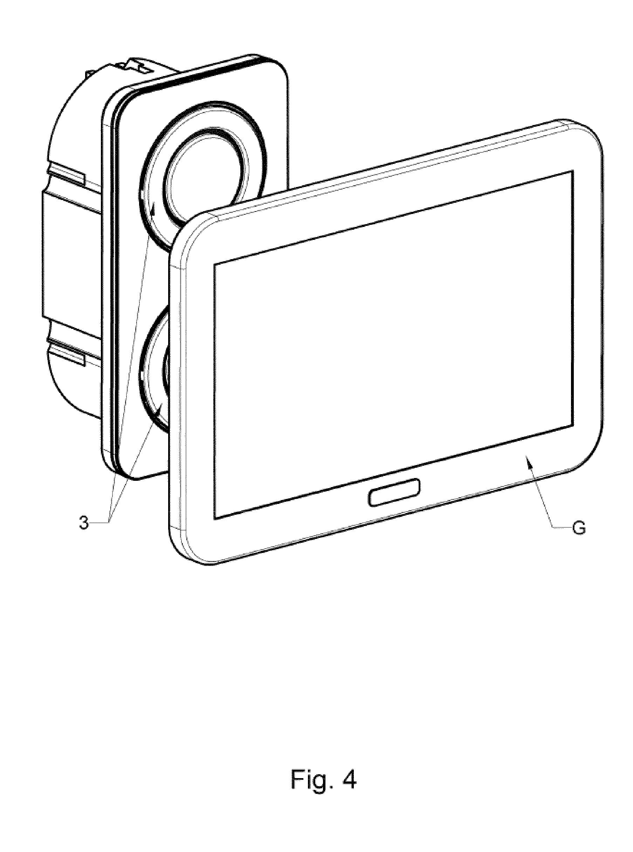

Wie insbesondere aus Figur 3 und Figur 4 hervorgeht, ist die Halteeinrichtung mit ihren beiden Halteelementen 3 dazu geeignet, beliebig gestaltete mobile elektrische/elektronische Geräte G (mobile Kleingeräte) haltend aufzunehmen bzw. anzukoppeln. Wie insbesondere aus Figur 3 hervorgeht, ist ein solches mobiles Kleingerät G beispielsweise als Mobiltelefon (Smartphone) ausgeführt. Wie insbesondere aus Figur 4 hervorgeht, ist ein solches mobiles Kleingerät G als Tablet- PC ausgeführt. Selbstverständlich sind diese beiden mobilen Kleingeräte G nur Beispiele hinsichtlich der Halte- bzw. Kopplungsmöglichkeiten einer solchen Halteeinrichtung. Weisen die mobilen Kleingeräte G entsprechende Abmessungen auf, ist es vorteilhafterweise möglich, auch mehrere solcher mobilen Kleingeräte G durch eine einzige Halteeinrichtung haltend aufzunehmen. Zudem ergibt sich vorteilhafterweise die Möglichkeit, bedarfsgerecht mal das eine oder mal das andere mobile Kleingerät G aufzunehmen, was bedeutet, mehrere mobile Kleingeräte G können einer einzigen Halteeinrichtung, und somit einem einzigen geeigneten, schnell auffindbaren Ort zugeordnet werden.

Wie des Weiteren aus den Figuren hervorgeht, ist eine solche Halteeinrichtung auf einfache Art und mit einer Einrichtung 9 zur Nahfeldkommunikation ausgerüstet, die einen Datenaustausch via Funktechnik betreibt, um zum Beispiel ein vereinfachtes Koppeln von Bluetooth-/Wlan-Verbindungen zu ermöglichen. Die Einrichtung 9 ist als passiver NFC-Tag ausgebildet, der inklusive der notwendigen Antenne auf einer selbstklebenden Folie untergebracht ist. Bei dieser Technik ist vorteilhafterweise kein elektrischer Anschluss notwendig, um ein vereinfachtes Koppeln von Bluetooth-/Wlan-Verbindungen zu ermöglichen. Die mit dem passiven NFC-Tag und der Antenne versehene selbstklebende Folie kann je nach Bedarf am Sockelteil 1 oder an der Designabdeckung 4 angebracht sein. Beim vorliegenden Ausführungsbeispiel wird die selbstklebende Folie mit dem passiven NFC-Tag und der Antenne am Sockelteil 1 angebracht. Es besteht auch die Möglichkeit, zum Beispiel für Beleuchtungszwecke das Sockelteil 1 durch entsprechende Verbindungselemente an ein elektrisches Installationssystem eines Gebäudes anzuschließen, was beim vorliegenden Ausführungsbeispiel nicht vorgesehen ist.

Durch das Andrücken eines mobilen Kleingerätes G an die Halteelemente 3 kommt der haltende Vakuumeffekt zur Wirkung. Damit ergibt sich die Möglichkeit, bei Bedarf ein derart gehaltenes mobiles Kleingerät G auch komfortabel bedienen zu können. Die beiden Halteelemente 3 bestehen aus einem speziellen Polyurethan, welche durch eine kraterartige Oberfläche für den zur Haltewirkung notwendigen Vakuumeffekt sorgen. Bei leichtem Ablegen von glatten Gegenständen (mobile Kleingeräte G) haften diese bereits sehr stark auf der Oberfläche der beiden Halteelemente 3. Bei leichtem Andrücken eines mobilen Kleingerätes G entsteht eine noch stärkere Haltewirkung durch den Vakuumeffekt, wie man es zum Beispiel von einem Saugnapf kennt.

Auf einfache Art und Weise ist eine Halteeinrichtung realisiert, welche, ohne bauliche Änderungen vornehmen zu müssen, in der Lage ist, mobile elektrische/elektronische Geräte G (mobile Kleingeräte) mit beliebigen Bauformen haltend aufzunehmen. Bei solchermaßen ausgebildeten Halteeinrichtungen ist besonders vorteilhaft, dass sich diese besonders einfach in bestehende Designlinien, auch von, bereits im Markt befindlicher elektrischer/elektronischer Installationsgeräte integrieren lassen und zur haltenden Aufnahme von mobilen Kleingeräten G über Haltemittel verfügen, welche nicht um einen wesentlichen Teil über die frontseitige Oberfläche hinausstehen. Wie bereits erwähnt, besteht vorteilhafterweise die Möglichkeit, wenn die mobilen Kleingeräte G entsprechende Abmessungen aufweisen, auch mehrere solcher mobilen Kleingeräte G durch eine einzige Halteeinrichtung haltend aufzunehmen.

Weiterhin ist, wie bereits erwähnt, vorteilhaft, dass bedarfsgerecht mal das eine oder mal das andere mobile Kleingerät G aufgenommen werden kann, was bedeutet, mehrere mobile Kleingeräte G können einer einzigen Halteeinrichtung, und somit einem einzigen geeigneten, schnell auffindbaren Ort zugeordnet werden.

### Bezugszeichenliste

- 1: Sockelteil
- 2: Befestigungselemente
- 3: Haltelernente
- 3a: Erster Haltebereich
- 3b: Zweiter Haltebereich
- 4: Designabdeckung
- 5: Installationsdose
- 6: Positionieningsbereiche
- 7: Klettelemente
- 8: Positionierhilfen
- 9: Einrichtung zur Nahfeldkommunikation

- G: Mobiles elektrisches/elektronisches Gerät (mobiles Kleingerät)

## Patentansprüche

1. Halteeinrichtung für mobile elektrische/elektronische Geräte mit einem rückseitig über Befestigungselemente an einer Wand eines Gebäudes festlegbaren Sockelteil, welches frontseitig zumindest ein Halteelement aufweist, **dadurch gekennzeichnet, dass** zumindest ein Halteelement (3) als ein eine vakuumeffektartige Haltewirkung für das zugeordnete mobile elektrische/elektronische Gerät (G) entwickelndes Haftpad mit Nanostruktur ausgeführt ist.

2. Halteeinrichtung nach Anspruch 1, **dadurch gekennzeichnet, dass** frontseitig zumindest eine, das zumindest eine Halteelement (3) formschön umgebende Designabdeckung (4) vorgesehen ist, welche haltend mit der Frontseite des Sockelteils (1) in Verbindung steht.

3. Halteeinrichtung nach Anspruch 1 oder 2, **dadurch gekennzeichnet, dass** zumindest zwei Halteelemente (3) vorgesehen sind.

4. Halteeinrichtung nach einem der Ansprüche 1 bis 3, **dadurch gekennzeichnet, dass** zumindest ein zur Wandbefestigung vorgesehenes Befestigungselement (2) als Schraube ausgeführt ist.

5. Halteeinrichtung nach einem der Ansprüche 1 bis 4, **dadurch gekennzeichnet, dass** zumindest eine haltende Verbindung zwischen dem Sockelteil (1) und der Designabdeckung (4) als Rastverbindung ausgeführt ist.

6. Halteeinrichtung nach einem der Ansprüche 1 bis 5, **dadurch gekennzeichnet, dass** zumindest eine haltende Verbindung zwischen dem Sockelteil (1) und der Designabdeckung (4) als Klettverbindung ausgeführt ist.

7. Halteeinrichtung nach einem der Ansprüche 1 bis 6, **dadurch gekennzeichnet, dass** das Sockelteil (1) rückseitig eine haltende Verbindung an einer Installationsdose (5) ermöglicht.

8. Halteeinrichtung nach einem der Ansprüche 1 bis 7, **dadurch gekennzeichnet, dass** zwischen zumindest einem Halteelement (3) und dem Sockelteil (1) ein Trennelement vorhanden ist, welches zum einfachen Austausch mit dem Sockelteil (1) verrastet und/oder verschraubt ist.

9. Halteeinrichtung nach einem der Ansprüche 1 bis 8, **dadurch gekennzeichnet, dass** am Sockelteil (1) und oder der Designabdeckung (4) eine Einrichtung (9) zur Nahfeldkommunikation vorhanden ist.

10. Halteeinrichtung nach Anspruch 9, **dadurch gekennzeichnet, dass** zumindest eine Einrichtung (9) zur Nahfeldkommunikation als passiver NFC-Tag ausgebildet ist.

11. Halteeinrichtung nach einem der Ansprüche 1 bis 10, **dadurch gekennzeichnet, dass** das Sockelteil (1) an ein elektrisches/elektronisches System eines Gebäudes angeschlossen ist.
